(19) **Europäisches Patentamt / European Patent Office / Office européen des brevets**

(11) **EP 2 838 767 B1**

(12) **EUROPÄISCHE PATENTSCHRIFT**

(45) Veröffentlichungstag und Bekanntmachung des Hinweises auf die Patenterteilung:
**17.02.2016 Patentblatt 2016/07**

(21) Anmeldenummer: **13707130.4**

(22) Anmeldetag: **19.02.2013**

(51) Int Cl.:
**B60T 13/74** *(2006.01)*  **B60T 13/66** *(2006.01)*
**G05B 13/04** *(2006.01)*  **G05D 17/00** *(2006.01)*

(86) Internationale Anmeldenummer:
**PCT/EP2013/053235**

(87) Internationale Veröffentlichungsnummer:
**WO 2013/156176 (24.10.2013 Gazette 2013/43)**

(54) **VERFAHREN ZUM EINSTELLEN EINER FESTSTELLBREMSE IN EINEM FAHRZEUG**

METHOD FOR ADJUSTING A PARKING BRAKE IN A VEHICLE

PROCÉDÉ DESTINÉ AU RÉGLAGE D'UN FREIN DE STATIONNEMENT DANS UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.04.2012 DE 102012206226**

(43) Veröffentlichungstag der Anmeldung:
**25.02.2015 Patentblatt 2015/09**

(73) Patentinhaber: **Robert Bosch GmbH**
**70442 Stuttgart (DE)**

(72) Erfinder: **SUSSEK, Ullrich**
**71720 Oberstenfeld (DE)**

(56) Entgegenhaltungen:
**DE-A1-102006 052 810    DE-A1-102009 001 258**

**Beschreibung**

Die Erfindung bezieht sich auf ein Verfahren zum Einstellen einer Feststellbremse in einem Fahrzeug nach dem Oberbegriff des Anspruches 1.

Stand der Technik

Aus der DE 10 2006 052 810 A1 ist ein Verfahren zur Abschätzung der von einem elektrischen Bremsmotor erzeugten Klemmkraft in einer Feststellbremse eines Kraftfahrzeugs bekannt. Bei Betätigung des elektrischen Bremsmotors wird ein Bremskolben, der Träger eines Bremsbelages ist, axial gegen eine Bremsscheibe beaufschlagt. Die Klemmkraft wird unter Berücksichtigung des Stroms, der Versorgungsspannung des Bremsmotors sowie der Motordrehzahl aus einem Differenzialgleichungssystem bestimmt, welches das elektrische und das mechanische Verhalten des Bremsmotors abbildet.

Der Bremsmotor wird ebenso wie eine Reihe weiterer elektrischer Verbraucher über das Bordnetz im Kraftfahrzeug mit Strom versorgt. Wird nach dem Starten des elektrischen Bremsmotors ein weiterer Verbraucher zugeschaltet, verursacht dies einen Spannungseinbruch und Stromabfall im Bremsmotor, was zu einem falschen Wert der zu ermittelnden Klemmkraft führen kann.

Der Erfindung liegt die Aufgabe zugrunde, mit einfachen Maßnahmen die von einer Feststellbremse über einen elektrischen Bremsmotor erzeugte Klemmkraft mit hoher Genauigkeit auch für den Fall zu bestimmen, dass während einer Betätigung des Bremsmotors zusätzliche Verbraucher im Bordnetz des Kraftfahrzeugs ein- bzw. ausgeschaltet werden.

Diese Aufgabe wird erfindungsgemäß mit den Merkmalen des Anspruches 1 gelöst. Die Unteransprüche geben zweckmäßige Weiterbildungen an.

Das Verfahren zur Bestimmung der Klemmkraft kann bei elektromechanischen Feststellbremsen in Kraftfahrzeugen eingesetzt werden, welche einen elektrischen Bremsmotor aufweisen, bei dessen Betätigung die Klemmkraft erzeugt wird. Hierbei wird die Rotationsbewegung des Rotors des elektrischen Bremsmotors in eine axiale Stellbewegung einer Spindel übertragen, über die ein Bremskolben, welcher Träger eines Bremsbelages ist, axial gegen eine Bremsscheibe gepresst wird.

Die Feststellbremse im Fahrzeug kann gegebenenfalls mit einer Zusatzbremsvorrichtung ausgestattet sein, um bedarfsweise und zusätzlich zur elektromechanischen Klemmkraft auch eine Zusatzklemmkraft bereitzustellen. Bei der Zusatzbremsvorrichtung handelt es sich bevorzugt um die hydraulische Fahrzeugbremse des Fahrzeugs, deren Hydraulikdruck auf den Bremskolben wirkt.

Um die aktuell wirkende, vom elektrischen Bremsmotor erzeugte Klemmkraft zu ermitteln, ist die Kenntnis des aktuellen Motorstroms erforderlich, aus dem das Motorlastmoment und daraus unter Zugrundelegung einer Getriebeuntersetzung sowie des Wirkungsgrades die Klemmkraft berechnet werden kann. Als Messgrößen genügen grundsätzlich der Strom und die Spannung im elektrischen Bremsmotor.

Nach dem Einschalten des elektrischen Bremsmotors steigt der Motorstrom, lediglich durch die Ankerinduktivität gebremst, zunächst stark an, um dann anschließend durch die beginnende Ankerrotation wieder abzufallen. Der Einschaltstromstoß kann aufgrund seiner hohen Dynamik zur Schätzung der elektrischen Motorparameter $R_M$ (Motorwiderstand) und $K_M$ (Motorkonstante) verwendet werden. In dem auf den Strompeak sich anschließenden, abfallenden Ast des Stroms werden Messwerte ermittelt für die Berechnung der Motorparameter und in Abhängigkeit hiervon der Klemmkraft.

Wird in dieser Phase ein weiterer elektrischer Verbraucher, der ebenso wie der elektrische Bremsmotor am Bordnetz des Kraftfahrzeugs hängt, zu- oder abgeschaltet, führt dies zu einer Verfälschung der Spannungs- und Stromkurve, die jeweils annähernd sprungartig auf einen tieferen bzw. höheren Wert wechseln. Wird zum Beispiel ein elektrischer Verbraucher zugeschaltet, sinkt sowohl der Spannungsverlauf als auch der Stromverlauf des elektrischen Bremsmotors annähernd schlagartig ab. Werden nach dem Sprung die Motorparameter aus den Strom- und Spannungswerten bestimmt, führt dies zu einer Verfälschung der berechneten Klemmkraft.

Um die Klemmkraft mit ausreichender Genauigkeit auch beim Zu- oder Abschalten eines weiteren elektrischen Verbrauchers bestimmen zu können, wird im Falle eines Sprungs in der Spannung bzw. des Strom des elektrischen Bremsmotors ein den Sprung kompensierender Korrekturstrom ermittelt, der der Berechnung der Motorparameter des Bremsmotors zur Klemmkraftermittlung zugrunde gelegt wird. Der Korrekturstrom folgt zumindest annähernd dem ursprünglichen Verlauf des Motorstroms ohne Zu- bzw. Abschalten eines weiteren elektrischen Verbrauchers.

Da jedes Zu- oder Abschalten eines Verbrauchers als erneuter Schaltvorgang betrachtet werden kann, der dem ursprünglichen Einschaltvorgang des elektrischen Bremsmotors überlagert wird, kann die Stromkurve aus sich selbst heraus kompensiert werden, indem zweckmäßigerweise ein geeigneter Skalierungsfaktor bestimmt wird, mit dem der Stromverlauf nach dem erfolgten Sprung korrigiert wird. Zweckmäßigerweise wird der Stromverlauf nach dem Sprung um einen Korrekturterm angehoben bzw. abgesenkt, der durch Multiplikation des Skalierungsfaktors mit einem vor dem Sprung liegenden Stromwert ermittelt wird. Hierbei kann von dem ursprünglichen Stromwert noch der Leerlaufstrom des Bremsmotors subtrahiert werden, der nach dem Einschaltstromstoß lastlos stabil eingenommen wird.

Die Korrektur des Stromwertes nach dem Sprung folgt je nach Sprungrichtung durch Addition oder Subtraktion des Korrekturterms. Wird ein zusätzlicher elektrischer Verbraucher zugeschaltet, sinkt der Stromwert ab, dementsprechend muss nach dem Stromeinbruch über den Korrekturwert der Stromverlauf wieder angehoben werden. Umgekehrt steigt der Stromverlauf an, wenn ein bereits zugeschalteter elektrischer Verbraucher während des Betätigens des elektrischen Bremsmotors abgeschaltet wird; in diesem Fall muss über den Korrekturwert der Stromverlauf nach dem erfolgten Sprung abgesenkt werden.

Die Korrektur hängt wesentlich von dem Skalierungsfaktor ab, welcher zweckmäßigerweise aus dem Verlauf der Spannung bestimmt wird, die am Bremsmotor anliegt. Der Skalierungsfaktor hängt von dem Spannungssprung ab, der beim Zu- oder Abschalten des zusätzlichen elektrischen Verbrauchers in der Motorspannung erfolgt. Der Skalierungsfaktor wird vorteilhaft aus dem Verhältnis von dem Spannungssprung zu der Differenz zwischen dem vor dem Sprung liegenden Spannungswert und einer Spannungskonstanten ermittelt. Die Spannungskonstante ist hierbei zweckmäßigerweise signifikant kleiner als die Betriebsspannung und liegt zum Beispiel bei einem Wert von 0.5V. Nach dem Ermitteln des Skalierungsfaktors kann wie vorbeschrieben der Korrekturstrom nach dem Sprung berechnet werden und daraus die Motorparameter, welche der Berechnung der Klemmkraft zugrunde liegen.

Alternativ zu einem vorgegebenen Wert kann die Spannungskonstante $U_{const}$ auch rekursiv als Produkt aus dem Motorwiderstand $R_M$ und dem Leerlaufstrom $i_L$ berechnet werden. Für den Motorwiderstand $R_M$ wird im ersten Durchlauf ein gegebener Startwert eingesetzt, der im weiteren Verlauf durch verbesserte Werte ersetzt wird. Nach mehreren rekursiven Berechnungsschritten erhält man den verbesserten Wert für die Spannungskonstante und damit auch ein besseres Ergebnis für den Motorwiderstand $R_M$ und die Motorkonstante $K_M$.

Grundsätzlich können mehrere korrigierte Stromwerte berechnet werden, indem Stromwerte zu verschiedenen Zeitpunkten vor dem Sprung mit dem Skalierungsfaktor multipliziert werden, um daraus den gewünschten Korrekturterm zu erhalten, welcher zum weiteren Stromwert vor dem Sprung hinzuaddiert bzw. von diesem subtrahiert wird. Somit ist es möglich, den durchgehenden Verlauf im Strom so zu schätzen, als wenn kein Sprung stattgefunden hätte.

Das erfindungsgemäße Verfahren läuft in einem Regel- bzw. Steuergerät im Fahrzeug ab, das zweckmäßigerweise Bestandteil des Feststellbremssystems ist.

Weitere Vorteile und zweckmäßige Ausführungen sind den weiteren Ansprüchen, der Figurenbeschreibung und den Zeichnungen zu entnehmen. Es zeigen:

Fig. 1    einen Schnitt durch eine elektromechanische Feststellbremse für ein Fahrzeug, bei der die Klemmkraft über einen elektrischen Bremsmotor erzeugt wird,

Fig. 2    ein Schaubild mit dem zeitabhängigen Verlauf des Stroms und der Spannung nach dem Einschalten des Bremsmotors, wobei das Zuschalten eines weiteren Verbrauchers zu einem Spannungs- und Stromeinbruch führt.

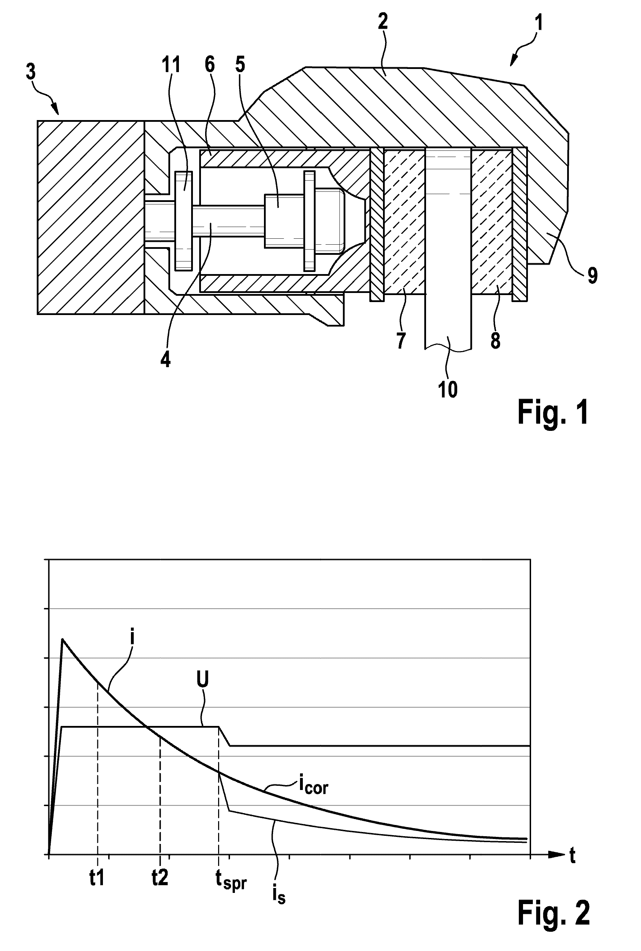

In Fig. 1 ist eine elektromechanische Feststellbremse 1 zum Festsetzen eines Fahrzeugs im Stillstand dargestellt. Die Feststellbremse 1 umfasst einen Bremssattel 2 mit einer Zange 9, welche eine Bremsscheibe 10 übergreift. Als Stellglied weist die Feststellbremse 1 einen Elektromotor als Bremsmotor 3 auf, der eine Spindel 4 rotierend antreibt, auf der ein als Spindelmutter ausgeführtes Spindelbauteil 5 drehbar gelagert ist. Bei einer Rotation der Spindel 4 wird das Spindelbauteil 5 axial verstellt. Das Spindelbauteil 5 bewegt sich innerhalb eines Bremskolbens 6, der Träger eines Bremsbelags 7 ist, welcher von dem Bremskolben 6 gegen die Bremsscheibe 10 gedrückt wird. Auf der gegenüberliegenden Seite der Bremsscheibe 10 befindet sich ein weiterer Bremsbelag 8, der ortsfest an der Zange 9 gehalten ist.

Innerhalb des Bremskolbens 6 kann sich das Spindelbauteil 5 bei einer Drehbewegung der Spindel 4 axial nach vorne in Richtung auf die Bremsscheibe 10 zu bzw. bei einer entgegen gesetzten Drehbewegung der Spindel 4 axial nach hinten bis zum Erreichen eines Anschlags 11 bewegen. Zum Erzeugen einer Klemmkraft beaufschlagt das Spindelbauteil 5 die innere Stirnseite des Bremskolbens 6, wodurch der axial verschieblich in der Feststellbremse 1 gelagerte Bremskolben 6 mit dem Bremsbelag 7 gegen die zugewandte Stirnfläche der Bremsscheibe 10 gedrückt wird.

Die Feststellbremse kann erforderlichenfalls von einer hydraulischen Fahrzeugbremse unterstützt werden, so dass sich die Klemmkraft aus einem elektromotorischen Anteil und einem hydraulischen Anteil zusammensetzt. Bei der hydraulischen Unterstützung wird die dem Bremsmotor zugewandte Rückseite des Bremskolbens 6 mit unter Druck stehendem Hydraulikfluid beaufschlagt.

Fig. 2 zeigt ein Schaubild mit dem zeitabhängigen Verlauf des Stroms i und der Spannung U an dem elektrischen Bremsmotor. Unmittelbar nach dem Einschalten des elektrischen Bremsmotors steigt der Strom i zunächst stark an und fällt nach dem Erreichen des Peaks langsamer wieder ab, wobei der abfallende Zweig des Stromverlaufs i zur Schätzung des Motorwiderstands $R_M$ und der Motorkonstante $K_M$ des elektrischen Bremsmotors verwendet werden kann. Die Motorparameter $R_M$ und $K_M$ werden für die Ermittlung der von dem elektrischen Bremsmotor ausgeübten elektromechanischen Klemmkraft benötigt. Die vom Bordnetz gelieferte Motorspannung U verharrt zunächst auf einem konstanten Niveau.

Zum Zeitpunkt $t_{spr}$ wird ein zusätzlicher elektrischer Verbraucher, der ebenso wie der elektrische Bremsmotor im Bordnetz hängt, zugeschaltet, woraufhin sowohl die Spannung U als auch der Strom i annähernd sprungartig einbrechen. Der tatsächliche Stromverlauf ist mit der gegenüber der idealen Stromkurve $i_{cor}$ mit $i_s$ gekennzeichnet.

Um aus dem tatsächlichen Stromverlauf $i_s$ auf den idealen Stromverlauf $i_{cor}$ rückzuschließen, welcher der Ermittlung der Motorparameter zugrunde gelegt wird, wird ein Skalierungsfaktor $f_{cor}$ aus dem Verhältnis des Spannungssprungs $\Delta U$ zum Zeitpunkt $t_{spr}$ im Spannungsverlauf U ermittelt. Der Spannungssprung $\Delta U$ wird hierbei in das Verhältnis zu einem vor dem Sprung liegenden Spannungswert $U_{t1}$ abzüglich einer Spannungskonstanten $U_{const}$ ermittelt:

$$f_{cor}\left(t_{spr}\right) = \frac{\Delta U\left(t_{spr}\right)}{U\left(t_1\right) - U_{const}} \ ,$$

wobei der Spannungswert $D_{t1}$ zum Zeitpunkt $t_1$ gemessen wird, welcher vor dem Sprungzeitpunkt $t_{spr}$ liegt.

Mit dem auf diese Weise ermittelten Skalierungsfaktor $f_{cor}$ wird der Korrekturstrom $i_{cor}$, welcher dem idealen Verlauf des Motorstroms ohne Zuschalten eines weiteren Verbrauchers entspricht, gemäß folgendem Zusammenhang ermittelt:

$$i_{cor}\left(t_{spr}\right) = i_s\left(t_{spr}\right) + f_{cor}\left(t_{spr}\right) \cdot \left(i_{t1} - i_L\right)$$

Hierin bezeichnet $i_{cor}(t_{spr})$ den korrigierten Strom nach dem Sprung zum Zeitpunkt $t_{spr}$, $i_s(t_{spr})$ den tatsächlichen Strom nach dem Sprung zum Zeitpunkt $t_{spr}$, $f_{cor}(t_{spr})$ den Skalierungsfaktor nach dem Sprung zum Zeitpunkt $t_{spr}$, $i_{t1}$ den Stromwert vor dem Sprung zum Zeitpunkt $t_1$ und $i_L$ den Leerlaufstrom, der nach dem Einschaltstromstoß lastlos stabil eingenommen wird.

Zweckmäßigerweise werden mehrere Stromwerte $i_{cor}$ zu weiteren Zeitpunkten $t_{spr+1}$, $t_{spr+2}$ ... $t_{spr+n}$ nach dem Sprung unter Berücksichtigung des Skalierungsfaktors $f_{cor}$ aus gemessenen Stromwerten i zu Zeitpunkten $t_2$, $t_3$ ... $t_{n+1}$ vor dem Sprung sowie aus gemessenen Stromwerten $i_s$ zu Zeitpunkten $t_{spr+1}$, $t_{spr+2}$ ... $t_{spr+n}$ nach dem Sprung berechnet:

$$i_{cor}\left(t_{spr+1}\right) = i_s\left(t_{spr+1}\right) + f_{cor}\left(t_{spr}\right) \cdot \left(i_{t2} - i_L\right)$$

$$i_{cor}\left(t_{spr+2}\right) = i_s\left(t_{spr+2}\right) + f_{cor}\left(t_{spr}\right) \cdot \left(i_{t3} - i_L\right)$$

$$\vdots$$
$$i_{cor}\left(t_{spr+n}\right) = i_s\left(t_{spr+n}\right) + f_{cor}\left(t_{spr}\right) \cdot \left(i_{tn+1} - i_L\right)$$

Auf diese Weise kann über die Korrektur des Stromwerts der ideale Stromverlauf über den gesamten Zeitbereich ermittelt werden.

## Patentansprüche

1. Verfahren zum Einstellen der von einer Feststellbremse (1) ausgeübten Klemmkraft, die zumindest teilweise von einer elektromotorischen Bremsvorrichtung aufgebracht wird, welche einen elektrischen Bremsmotor (3) umfasst, **dadurch gekennzeichnet, dass** im Falle eines Sprungs in der Spannung bzw. des Stroms des elektrischen Bremsmotors ein den Sprung kompensierender Korrekturstrom ($i_{cor}$) ermittelt wird, der der Berechnung der Motorparameter ($R_M$, $K_M$) des Bremsmotors zur Klemmkraftermittlung zugrunde gelegt wird.

2. Verfahren nach Anspruch 1, **dadurch gekennzeichnet, dass** der Korrekturstrom ($i_{cor}$) unter Berücksichtigung des Produkts eines Skalierungsfaktors ($f_{cor}$) und eines vor dem Sprung liegenden Stromwerts ($i_{t1}$) ermittelt wird.

3. Verfahren nach Anspruch 2, **dadurch gekennzeichnet, dass** der Korrekturstrom ($i_{cor}$) unter Berücksichtigung des Produkts des Skalierungsfaktors ($f_{cor}$) und der Differenz des vor dem Sprung liegenden Stromwerts ($i_{t1}$) und des

Leerlaufstroms ($i_L$) ermittelt wird:

$$i_{cor}\left(t_{spr}\right) = i_s\left(t_{spr}\right) + f_{cor}\left(t_{spr}\right) \cdot \left(i_{t1} - i_L\right)\ ,$$

wobei

$i_{cor}(t_{spr})$ den korrigierten Strom nach dem Sprung zum Zeitpunkt $t_{spr}$
$i_s(t_{spr})$ den tatsächlichen Strom nach dem Sprung zum Zeitpunkt $t_{spr}$
$f_{cor}(t_{spr})$ den Skalierungsfaktor nach dem Sprung zum Zeitpunkt $t_{spr}$
$i_{t1}$ den Stromwert vor dem Sprung
$i_L$ den Leerlaufstrom

bezeichnet.

**4.** Verfahren nach Anspruch 2 oder 3, **dadurch gekennzeichnet, dass** verschiedene Stromwerte zu weiteren Zeitpunkten nach dem Sprung unter Berücksichtigung des Skalierungsfaktors ($f_{cor}$) aus Stromwerten vor dem Sprung berechnet werden.

**5.** Verfahren nach einem der Ansprüche 2 bis 4, **dadurch gekennzeichnet, dass** der Skalierungsfaktor ($f_{cor}$) aus dem Verhältnis von Spannungssprung ($\Delta U$) zu einem vor dem Sprung liegenden Spannungswert ($U_{t1}$) ermittelt wird.

**6.** Verfahren nach Anspruch 5, **dadurch gekennzeichnet, dass** der der Skalierungsfaktor ($f_{cor}$) aus dem Verhältnis von Spannungssprung ($\Delta U$) zu der Differenz zwischen dem vor dem Sprung liegenden Spannungswert ($U_{t1}$) und einer Konstanten ($U_{const}$) ermittelt wird:

$$f_{cor}\left(t_{spr}\right) = \frac{\Delta U\left(t_{spr}\right)}{U\left(t_1\right) - U_{const}}$$

**7.** Verfahren nach Anspruch 6, **dadurch gekennzeichnet, dass** die Konstante ($U_{const}$) signifikant kleiner als die Betriebsspannung ($U_B$) ist und beispielsweise bei 0.5 V liegt.

**8.** Verfahren nach Anspruch 6 oder 7, **dadurch gekennzeichnet, dass** die Konstante ($U_{const}$) aus dem Produkt von Motorwiderstand ($R_M$) und dem Leerlaufstrom ($i_L$) bestimmt wird:

$$U_{const} = R_M \cdot i_L$$

**9.** Verfahren nach einem der Ansprüche 1 bis 8, **dadurch gekennzeichnet, dass** der Sprung ein Spannungs- bzw. Stromeinbruch ist.

**10.** Verfahren nach einem der Ansprüche 1 bis 9, **dadurch gekennzeichnet, dass** die Klemmkraft zumindest teilweise von einer Zusatzbremsvorrichtung aufgebracht wird.

**11.** Verfahren nach Anspruch 10, **dadurch gekennzeichnet, dass** als Zusatzbremsvorrichtung eine hydraulische Fahrzeugbremse verwendet wird.

**12.** Regel- bzw. Steuergerät zur Durchführung des Verfahrens nach einem der Ansprüche 1 bis 11.

**13.** Feststellbremse in einem Fahrzeug mit einem Regel- bzw. Steuergerät nach Anspruch 12.

**Claims**

1. Method for adjusting the clamping force which is exerted by a parking brake (1) and is applied at least partially by an electric-motor-operated brake device which comprises an electric brake motor (3), **characterized in that** in the event of a jump in the voltage or the current of the electric brake motor a correction current ($i_{cor}$) which compensates the jump is determined and is used as the basis for the calculation of the motor parameters ($R_M$, $K_M$) of the brake motor for determining the clamping force.

2. Method according to Claim 1, **characterized in that** the correction current ($i_{cor}$) is determined taking into account the product of a scaling factor ($f_{cor}$) and of a current value ($i_{t1}$) occurring before the jump.

3. Method according to Claim 2, **characterized in that** the correction current ($i_{cor}$) is determined taking into account the product of the scaling factor ($f_{cor}$) and the difference between the current value ($i_{t1}$) occurring before the jump and the idling current ($i_L$) :

$$ i_{cor}(t_{spr}) = i_s(t_{spr}) + f_{cor}(t_{spr}) \cdot (i_{t1} - i_L) \ , $$

where:

$i_{spr}(t_{spr})$ denotes the corrected current after the jump at the time $t_{spr}$
$i_s(t_{spr})$ denotes the actual current after the jump at the time $t_{spr}$
$f_{cor}(t_{spr})$ denotes the scaling factor after the jump at the time $t_{spr}$
$i_{t1}$ denotes the current value before the jump $i_L$ denotes the idling current.

4. Method according to Claim 2 or 3, **characterized in that** various current values are calculated at further times after the jump taking into account the scaling factor ($f_{cor}$) on the basis of the current values before the jump.

5. Method according to one of Claims 2 to 4, **characterized in that** the scaling factor ($f_{cor}$) is determined on the basis of the ratio of the voltage jump ($\Delta U$) to a voltage value ($U_{t1}$) occurring before the jump.

6. Method according to Claim 5, **characterized in that** the scaling factor ($f_{cor}$) is determined on the basis of the ratio of the voltage jump ($\Delta U$) to the difference between the voltage value ($U_{t1}$) occurring before the jump and a constant ($U_{const}$) :

$$ f_{cor}(t_{spr}) = \frac{\Delta U(t_{spr})}{U(t_1) - U_{const}} \ . $$

7. Method according to Claim 6, **characterized in that** the constant ($U_{const}$) is significantly smaller than the operating voltage ($U_B$) and is, for example 0.5 V.

8. Method according to Claim 6 or 7, **characterized in that** the constant ($U_{const}$) is determined on the basis of the product of the motor resistance ($R_M$) and the idling current ($i_L$) ;

$$ U_{const} = R_M \cdot i_l \ . $$

9. Method according to one of Claims 1 to 8, **characterized in that** the jump is a voltage dip or current dip.

**10.** Method according to one of Claims 1 to 9, **characterized in that** the clamping force is applied at least partially by an additional braking device.

**11.** Method according to Claim 10, **characterized in that** a hydraulic vehicle brake is used as an additional braking device.

**12.** Closed-loop or open-loop control device for carrying out the method according to one of Claims 1 to 11.

**13.** Parking brake in a vehicle having a closed-loop or open-loop control device according to Claim 12.

**Revendications**

**1.** Procédé pour régler la force de serrage exercée par un frein de stationnement (1), appliquée au moins en partie par un ensemble de freinage à moteur électrique qui comporte un moteur électrique de frein (3), **caractérisé en ce que** dans le cas d'un saut de tension ou de courant du moteur électrique de frein, un courant de correction ($i_{cor}$) qui compense le saut est déterminé et est utilisé comme base pour le calcul des paramètres ($R_M$, $K_M$) du moteur de frein en vue de la détermination de la force de serrage.

**2.** Procédé selon la revendication 1, **caractérisé en ce que** le courant de correction ($i_{cor}$) est déterminé en tenant compte du produit d'un facteur d'échelle ($f_{cor}$) et d'une valeur de courant ($i_{t1}$) présente avant le saut.

**3.** Procédé selon la revendication 2, **caractérisé en ce que** le courant de correction ($i_{cor}$) est déterminé en tenant compte du produit du facteur d'échelle ($f_{cor}$) et la différence entre la valeur de courant ($i_{t1}$) présente avant le saut et le courant à vide ($i_L$) :

$$i_{cor}(t_{spr}) = i_s(t_{spr}) + f_{cor}(t_{spr}) \cdot (i_{t1} - i_L),$$

dans laquelle :

$i_{cor}(t_{spr})$ représente le courant corrigé après le saut à l'instant $t_{spr}$,
$i_s(t_{spr})$ représente le courant effectif après le saut à l'instant $t_{spr}$,
$f_{cor}(t_{spr})$ représente le facteur d'échelle après le saut à l'instant $t_{spr}$,
$i_{t1}$ représente la valeur du courant avant le saut et
$i_L$ représente le courant à vide.

**4.** Procédé selon les revendications 2 ou 3, **caractérisé en ce que** différentes valeurs de courant sont calculées à d'autres instants après le saut, en tenant compte du facteur d'échelle ($f_{cor}$), à partir de valeurs de courant présentes avant le saut.

**5.** Procédé selon l'une des revendications 2 à 4, **caractérisé en ce que** le facteur d'échelle ($f_{cor}$) est déterminé à partir du rapport entre le saut de tension ($\Delta U$) et une valeur de tension ($U_{t1}$) présente avant le saut.

**6.** Procédé selon la revendication 5, **caractérisé en ce que** le facteur d'échelle ($f_{cor}$) est déterminé à partir du rapport entre le saut de tension ($\Delta U$) et la différence entre la valeur de tension ($U_{t1}$) présente avant le saut et une constante ($U_{const}$) :

$$f_{cor}(t_{spr}) = \frac{\Delta U(t_{spr})}{U(t_1) - U_{const}}$$

**7.** Procédé selon la revendication 6, **caractérisé en ce que** la constante ($U_{const}$) est beaucoup plus petite que la tension de service ($U_B$) et est par exemple de 0,5 V.

8. Procédé selon les revendications 6 ou 7, **caractérisé en ce que** la constante ($U_{const}$) est déterminée à partir du produit de la résistance ($R_M$) du moteur et du courant à vide ($i_L$) :

$$U_{const} = R_M . i_L$$

9. Procédé selon l'une des revendications 1 à 8, **caractérisé en ce que** le saut est une interruption de tension ou de courant.

10. Procédé selon l'une des revendications 1 à 9, **caractérisé en ce que** la force de serrage est appliquée au moins en partie par un ensemble de frein supplémentaire.

11. Procédé selon la revendication 10, **caractérisé en ce que** comme ensemble de frein supplémentaire, c'est un frein hydraulique du véhicule qui est utilisé.

12. Appareil de réglage ou de commande en vue de l'exécution du procédé selon l'une des revendications 1 à 11.

13. Frein de stationnement de véhicule présentant un appareil de régulation ou de commande selon la revendication 12.

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006052810 A1